# EUROPEAN PATENT SPECIFICATION

(11) **EP 0 753 240 B1**
(45) Date of publication and mention of the grant of the patent: **13.10.2004**
(21) Application number: 95916155.5
(22) Date of filing: 30.03.1995
(51) Int. Cl.: H05B 6/68, H05B 6/80, H05B 6/76, H05B 6/70

(54) **APPARATUS AND METHOD FOR MICROWAVE PROCESSING OF MATERIALS**
VORRICHTUNG UND VERFAHREN ZUR MIKROWELLENBEARBEITUNG VON MATERIALIEN
PROCEDE ET APPAREIL DE TRAITEMENT DE MATERIAUX PAR LES MICRO-ONDES

(30) Priority: 31.03.1994 US 221188; 14.09.1994 US 306305
(43) Date of publication of application: 15.01.1997
(73) Proprietor: UT-Battelle, LLC, Oak Ridge, TN 37831-6498 (US)
(72) Inventor: JOHNSON, Arvid, C., Cary, NC 27513 (US); LAUF, Robert, J., Oak Ridge, TN 37830 (US); BIBLE, Don, W., Clinton, TN 37716 (US); MARKUNAS, Robert, J., Chapel Hill, NC 27514 (US)
(74) Representative: Holmes, Miles Keeton
(86) International application number: PCT/US1995/004022
(87) International publication number: WO 1995/027388

(56) References cited:
- US-A- 3 806 689
- US-A- 4 210 795
- US-A- 4 314 128
- US-A- 4 714 812
- US-A- 4 771 153
- US-A- 5 033 478
- US-A- 5 321 222

## Description

This invention was made with Government support under Contract No. DE-AC05-84OR21400 awarded by the U.S. Department of Energy to Martin Marietta Energy Systems, Inc. and the Government has certain rights in this invention.

This application in part discloses and claims subject matter disclosed in earlier filed pending applications, Serial Number 08/219,098 filed on March 29, 1994 and Serial Number 08/221,188 filed on March 31, 1994, both of which disclose and claim subject matter disclosed in an earlier file application, Serial Number 07/792,103 filed on November 14, 1991, which issued as United States Letters Patent No. 5,321,222 on June 14, 1994, which disclosed subject matter invented by at least one inventor of the present invention.

### Technical Field

This invention relates to the field of microwave radiation. More specifically, this invention relates to a microwave furnace having the capability of selectively varying the frequency and power of the microwave source.

### Background Art

In the field of microwave radiation, it is well known that microwave furnaces are typically constructed with a fixed operating frequency. It has long been known that the interactions of various materials with microwaves are frequency dependent. These interactions may include curing rubber and sintering ceramics. It is therefore desirable to have a microwave furnace that can be operated over a broad frequency range.

Most microwave sources have a very narrow bandwidth because they employ a resonant cavity. Microwave ovens constructed for home use are provided with a magnetron which operates at 2.45 GigaHertz (GHz), which is an efficient frequency for heating water. Due to the coupling ability of a 2.45 GHz microwave to water, these ovens are used for cooking foods, drying, and other purposes wherein the principal material to be acted upon is water. However, it is well known that frequencies in this range are not suitable in all situations, such as with heating plasmas, sintering materials such as silica, and preparing films such as diamond films.

The use of frequency sweeping over a wide range as a means of mode stirring has important implications for the use of microwave power to sterilize medical equipment or contaminated wastes. In such uses it is crucial to eliminate "dead" areas in the cavity wherein sufficient power may not be received in order for complete sterilization. Electronic frequency sweeping may be performed at a high rate of speed, thereby creating a much more uniform time-averaged power density throughout the furnace cavity. The desired frequency sweeping may be accomplished through the use of a variety of microwave electron devices. A helix traveling wave tube (TWT), for example, allows the sweeping to cover a broad bandwidth (e.g., 2 to 8 GHz) compared to devices such as the voltage tunable magnetron (2.45 ± 0.05 GHz). Other devices have other characteristic bandwidths as will be disclosed hereinafter.

Further, fixed-frequency microwave ovens typically found in the home are known to have cold spots and hot spots. Such phenomena are attributed to the ratio of the wavelength to the size of the microwave cavity. With a relatively low frequency microwave introduced into a small cavity, standing waves occur and thus the microwave power does not uniformly fill all of the space within the cavity, and the unaffected regions are not heated. In the extreme case, the oven cavity becomes practically a "single-mode" cavity.

Attempts have been made at mode stirring, or randomly deflecting the microwave "beam", in order to break up the standing modes and thereby fill the cavity with the microwave radiation. One such attempt is the addition of rotating fan blades at the beam entrance of the cavity.

Another method used to overcome the adverse effects of standing waves is to intentionally create a standing wave within a single-mode cavity such that the workpiece may be placed at the location determined to have the highest power (the hot spot). Thus, only the portion of the cavity in which the standing wave is most concentrated will be used.

It has been shown that the sintering behavior of various materials improves at higher frequencies, although the exact reasons are not known. However, existing state-of-the-art technology has made difficult the task of conducting a series of identical sintering experiments in which only the frequency is changed. This is due in large part to the fact that each microwave source is connected to a different furnace cavity. It is well known that the geometry of the furnace cavity is a parameter which must be considered in such experiments.

Furnaces incorporating gyrotron oscillators to produce fixed-frequency microwaves at 28 GHz have been reported in the literature. The gyrotron furnaces are capable of sintering some materials more efficiently than those ovens provided with the 2.45 GHz magnetrons. The gyrotron furnaces have specific applications in sintering materials such as ceramics. However, 28 GHz is not an efficient frequency with which to sinter all materials. It is desired to determine the most efficient frequencies to apply to a given material in a furnace with a cavity having a selected configuration.

The frequency for most efficient processing may vary for a given material as the heating process occurs. As a material changes phases, a varied frequency may be required. Thus, it may be desired to have the capability of varying the frequency in the heating process, allowing the tester to begin heating the specimen at one frequency and then change the frequency to maintain good coupling as the temperature rises. This may also be desirable when heating composite materials, where the varying materials efficiently react at different frequencies.

Other devices have been produced to change the parameters of the heating process of selected materials. Typical of the art are those devices disclosed in the following U.S. Patents:

| Pat. No. | Inventor(s) | Issue Date |
|---|---|---|
| 3,611,135 | D.L. Margerum | Oct 5, 1971 |
| 4,144,468 | G. Mourier | Mar 13, 1979 |
| 4,196,332 | A. MacKay B, et al. | Apr 1, 1980 |
| 4,340,796 | M. Yamaguchi, et al. | Jul 20, 1982 |
| 4,415,789 | T. Nobue, et al. | Nov 15, 1983 |
| 4,504,718 | H. Okatsuka, et al. | Mar 12, 1985 |
| 4,593,167 | O.K. Nilssen | Jun 3, 1986 |
| 4,777,336 | J. Asmussen | Oct 11, 1988 |
| 4,825,028 | P.H.Smith | Apr 25, 1989 |
| 4,843,202 | P.H.Smith, et al | Jun 27, 1989 |
| 4,866,344 | R.I. Ross, et al | Sep 12, 1989 |
| 4,939,331 | B.Berggren, et al. | Jul 3, 1990 |

The subject matter disclosed by MacKay ('332) is further disclosed in an article authored by MacKay B, et al., entitled "Frequency Agile Sources for Microwave Ovens", Journal of Microwave Power, 14(1), 1979. However, microwave furnace having a wide frequency range has not been disclosed, except in the above-referenced co-pending US application Serial Number 07/792,103.

The subject matter disclosed by US 4,714,812 comprises apparatus and method for processing dielectric materials. The apparatus comprises a number of tuneable cavity devices arranged vertically, one above the other, each having a movable piston to adjust the cavity size. The arrangement of modular cavities permits adjustment of the amount of microwave power, frequency and cavity size, each cavity effectively being a fixed frequency device at any given time. Reflected power is measured with only one frequency being measured at any given moment and is used in controlling the amount of power supplied to each cavity.

US 4,771,153 discloses apparatus for heating ceramics at high temperatures and at a controlled rate by means of microwaves. The method disclosed uses a cavity resonator with an adjustable iris for introducing the microwave power. Temperature detection at the sample within the cavity delivers signals to adjust frequency and power to the cavity. The control device enables control of the amount of opening of the iris and frequency.

US 5,033,478 discloses heating apparatus for hypothermia, utilising electromagnetic waves for locally heating cancerous cells within a living body. The apparatus operates at a fixed frequency for the conditions required. It teaches time multiplexing to irradiate several samples simultaneously. The output power level of the microwave generators is varied.

US 4,314,128 discloses apparatus for establishing a uniform temperature gradient across a sample, such as one being produced by being pulled through a melt. The system described provides for separate control of the frequency sweep range and power at different locations about the sample so as to achieve the desired lateral temperatures.

According to one aspect of the present invention there is provided a variable frequency microwave heating apparatus for processing selected materials comprising: a microwave furnace including a multi mode cavity for processing the selected materials; means for simultaneously irradiating the selected materials with at least two microwave signals with at least two frequencies being defined by the at least two microwave signals to produce a plurality of reflected frequencies; means for measuring microwave signals within the multi mode cavity, the measured signals including at least two of the plurality of reflected frequencies to obtain diagnostic information; means for processing the diagnostic information obtained from the measured microwave signals; and means for controlling at least one of the at least two frequencies based upon results from the processed diagnostic information obtained from the measured microwave signals.

According to another aspect of the present invention there is provided a method for processing a selected material comprising the steps of: a. placing said selected material in a variable frequency microwave heating apparatus including a microwave furnace including a multi-mode cavity; b. simultaneously irradiating said selected material with at least two microwave signals with at least two frequencies being defined by said at least two microwave signals to produce a plurality of reflected frequencies; c. measuring microwave signals within said multi-mode cavity said microwave signals measured including at least two of said plurality of reflected frequencies to obtain diagnostic information; d. processing said diagnostic information obtained in said step of measuring microwave signals; and e. controlling at least one of said at least two frequencies based upon results from said step of processing said diagnostic information obtained in said step of measuring microwave signals.

None of the prior art references disclosed above, including the co-pending US application Serial Number 07/792,103, explicitly recognises the diagnostic value of simultaneously providing multiple microwave frequencies for significantly enhancing the efficiency of microwave processing and achieving a high degree of processing control by extracting useful information from the multiple microwave frequencies.

Embodiments of the present invention allow modulation of the frequency of the microwaves introduced into a furnace cavity for testing or other selected applications. Some applicable processes include heat treatment, sterilisation, sintering, plasma processing, ore processing, polymerisation, etching, and preparing films. Preferably the method of the present invention allows for the monitoring of a microwave process to optimise the resonant frequency at which the target material is processed.

A microwave signal generator is provided for generating a low-power microwave signal for input to the microwave amplifier. The signal generator of the preferred embodiment is able to sweep a given range of frequencies, operate in pulse mode, modulate the frequency of the microwave signal, and produce various complex waveforms. The microwave signal generator of the preferred embodiment may be operated in the pulse mode using an internal pulse generator or it can be pulsed externally. An internal modulator is provided for wide band modulation. The internal modulator may operate in the AM mode or in the FM mode.

A voltage controller serves to modulate the amplitude of the microwave voltage-controlled oscillator. The microwave voltage-controlled oscillator may be used in lieu of the microwave signal generator to modify the frequency and amplitude of the generated microwave.

A first amplifier may be provided to amplify the magnitude of the signal output from the microwave signal generator or the microwave voltage-controlled oscillator. The first amplifier of the preferred embodiment is voltage-controlled, therefore the gain is adjustable such that the magnitude of the output is selectable by the operator.

A second amplifier is provided for processing the signal output by the first amplifier, or from the microwave signal generator or the microwave voltage-controlled oscillator when a first amplifier is not employed. The second amplifier outputs a high-power microwave signal to the furnace cavity and to which the workpiece is subjected. In the preferred embodiment, the second amplifier may be any one of a helix traveling-wave tube (TWT), a coupled-cavity TWT, a ring-loop TWT, a ring-bar TWT, a klystron, a twystron, or a gyrotron. These devices include an internal cooling device designed to dissipate the heat collected by the amplifier during normal operation.

In another embodiment of the invention, the oscillator and first and second amplifiers may be replaced with a frequency-agile coaxial magnetron, the frequency of which can be tuned manually, mechanically, or electrically.

A power supply is provided for the operation of the second amplifier. In the preferred embodiment, the power supply is a direct current source consisting of a precision-regulated helix power supply and a less-regulated collector high voltage supply.

A directional coupler is provided for detecting the direction of a signal and further directing the signal depending on the detected direction. A signal received from the microwave source is directed toward the microwave cavity. A signal received from the direction of the microwave cavity is directed toward a reflected power load. The directional coupler thus provides a means whereby reflected power is diverted away from the microwave source in order to protect the microwave source from power unabsorbed by the workpiece. The directional coupler of the preferred embodiment is water-cooled for the dissipation of heat collected through the transmission of power from the microwave source and the reflection of power from the microwave cavity.

A first power meter is provided for measuring the power delivered to the microwave cavity. The first power meter is used in conjunction with a second power meter positioned to measure reflected power from the microwave cavity in order to monitor the efficiency of the microwave cavity and to insure that reflected power is dissipated in the reflected power load and not by the second amplifier.

The reflected power load may also be used to test the functionality of the system by removing all workpieces from the furnace cavity, thus directing the entire signal from the second amplifier into the reflected power load. Comparisons can be made of the power received by the reflected power load and the power delivered from the second amplifier to determine any system losses.

The magnitude of the reflected power is detected by the second power meter. This magnitude may be used to determine the efficiency of the instant frequency of the microwave introduced into the microwave cavity. A lower reflected power will indicate a more efficient operating frequency due to the higher absorption rate of the selected workpiece.

A tapered transition may be provided to enhance the efficiency with which the broadband microwave energy is coupled into the microwave cavity. By acting as an impedance transformer between the transmission line and the microwave cavity, this transition increases the percentage power coupled into the cavity. In addition, for applications in which the microwave energy must be coupled into a cavity in which reactive gases are present, this tapered transition provides a means of reducing the power density of the microwave energy at the interface between the window and reactive gases, thereby preventing formation of plasma discharges at the input window.

The various embodiments of microwave heating apparatuses as heretofore described are used in the method of the present invention. In the method of the present invention, the second amplifier is first operated at a low power level while the microwave cavity remains empty. The second amplifier is used to sweep the empty microwave processing cavity over the frequency range to be studied. The power reflected through the directional coupler is then measured to determine a percent of power transmitted to the cavity and reflected back toward the second amplifier. Measurements are taken to determine the reflected power as a function of frequency, from which the resonant modes of the microwave processing cavity are quickly and accurately determined. By comparing reflected power at the various cavity modes, the optimum cavity mode can be immediately identified.

The sample to be processed is then placed into the microwave cavity. The frequency is swept again at a low power level. The presence of the sample in the microwave cavity has the effect of shifting the mode pattern down in frequency. Additionally, new modes become apparent. The initial resonance frequency at which the sample is to be processed is determined as that frequency at which the most efficient mode occurs. The output power is then increased to begin the microwave processing. Under high power conditions, the gas or sample can exhibit far different properties than when the system is cold. These changed conditions can affect the mode pattern within the cavity, causing the frequency of the desired resonant mode to drift. Thus, monitoring such reflected power yields the ability to maintain optimum coupling. In the method of the present invention, the percentage reflected power is monitored over a narrow frequency range near the desired mode, thus allowing the efficiency of the process to be maintained at a maximum.

Making use of the capability of the TWT to handle multiple, simultaneous signals at different frequencies, while driving the plasma or heating the sample at a high power level using the initial resonant frequency of choice, the microwave chamber is simultaneously probed with a low-power signal over the entire frequency range. The percentage reflected power versus frequency is then determined for this low-power, probe signal. The high-power mode spectrum is then compared with the low-power mode spectrum, which is ground state. A comparison of the mode spectrums illustrates the effectiveness of the resonant frequency of choice. Thus, a more appropriate, high-power resonant frequency can be chosen. This method will in some instances involve the discovery and use of a mode which is non-existent under the initial low-power condition or which might not appear optimum under the low-power testing.

While continuing to drive a mode selected using the initial low-power criteria, a second resonant frequency characteristic of the hot plasma or sample may be simultaneously driven at high power. Thus, the processing of the sample may be performed at two modes simultaneously, as opposed to one mode being used to process with the other used strictly for monitoring.

In a microwave-associated deposition process, for deposited materials such as diamond which have a resonance within the frequency range of the TWT, a low-power frequency probe can be used as a direct sensor to monitor the film growth. Simultaneously, a high-power signal is used to procure the deposition. By correlating the strength of the absorption at that frequency with film thickness, in situ sensing for a degree of intelligent process control is achieved.

Alternatively to the direct sensing of the film growth as indicated, indirect methods may also be used. Such instances occur especially when the optimum resonant frequency for the film is outside the frequency range of the second amplifier. one indirect technique for sensing film deposition includes placing a sample of a dielectric material in the microwave chamber such that the material has a resonant frequency within the frequency range of the second amplifier. As the dielectric material is coated, the change in the resonant frequency is used as a measure of the coating thickness.

In another method of indirectly sensing film deposition, a piezo-electric crystal is used. The piezo-electric crystal has a resonant frequency which changes as the deposited film thickness increases. The crystal is excited directly by the second amplifier or by an external electronic means, with the response being measured during the low-power microwave sweep.

The values of reflected power at each of *n* frequencies can be expressed as a vector of dimension *n*. Any number of such vectors, or signatures, are measurable, with each representing a different set of process conditions. These signatures are then used to train a neural network or other pattern classifier. The pattern classifier monitors the process in real time and provides a degree of active control by automatically adjusting process parameters to maintain those conditions which yield the signature characteristic of the desired operating regime.

### Brief Description of the Drawings

The above mentioned features of the invention will become more clearly understood from the following detailed description of the invention read together with the drawings in which:
Figure 1 is a schematic diagram of the preferred embodiment of the variable frequency microwave furnace system of the present invention;
Figure 2 illustrates a schematic diagram of another preferred embodiment of the variable frequency microwave furnace system of the present invention;
Figure 3 is a perspective view of the traveling wave tube, shown partially in section, which is incorporated in the variable frequency microwave furnace system of the present invention;
Figure 4 is a schematic diagram of a traveling wave tube which is incorporated in the variable frequency microwave furnace system of the present invention;
Figure 5 is an end view of the traveling wave tube, shown in cross-section, which is incorporated in the variable frequency microwave furnace system of the present invention;
Figure 6 illustrates a schematic diagram of another preferred embodiment of the variable frequency microwave heating apparatus of the present invention;
Figure 7 illustrates a schematic diagram of another preferred embodiment of the variable frequency microwave heating apparatus of the present invention;
Figure 8 is a graphical illustration of a mode pattern of an empty microwave cavity showing percentage reflected power versus frequency;
Figure 9 is a graphical illustration of a mode pattern of a microwave cavity having a load placed therein showing percentage reflected power versus frequency, and overlaying the illustration of Figure 8, thus illustrating the variation of the mode patterns within a microwave cavity as being dependant upon the loads placed therein; and

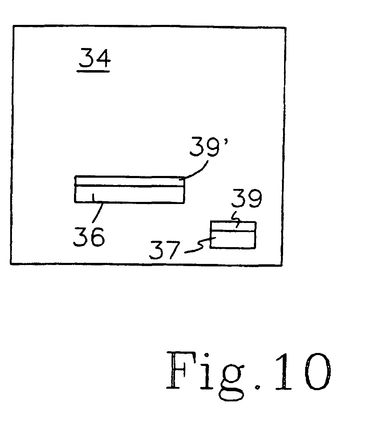

Figure 10 is a view of a furnace cavity in which is placed dielectric body along with the workpiece during a microwave-assisted coating process, whereby changes in the resonant properties of the dielectric body indicate the thickness of the coating being deposited on both the dielectric body and the workpiece.

### Best Mode for Carrying out the Invention

A variable frequency microwave heating apparatus incorporating various features of the present invention is illustrated generally at **10** in the figures. The microwave heating apparatus **10** is employed to perform the microwave processing method of the present invention. The microwave heating apparatus **10** is designed to allow modulation of the frequency of the microwaves introduced into a microwave cavity for testing or other selected applications. Such modulation is useful in testing procedures to determine the most efficient frequencies at which a particular material may be processed. Frequency modulation is also useful as a method of mode stirring as a means to create a more uniform power distribution in a relatively small furnace cavity.

Frequency modulation testing is useful, not only in the determination of efficient sintering frequencies of a selected material, but also in determining the most efficient sintering frequencies for the individual phases of a selected material. In the same vein, frequency modulation is useful in the processing of a material undergoing phase changes, wherein each phase of the material couples more efficiently to a frequency varied from that of other phases. Further, frequency modulation is useful when processing composite materials wherein each component couples to a different frequency than other components.

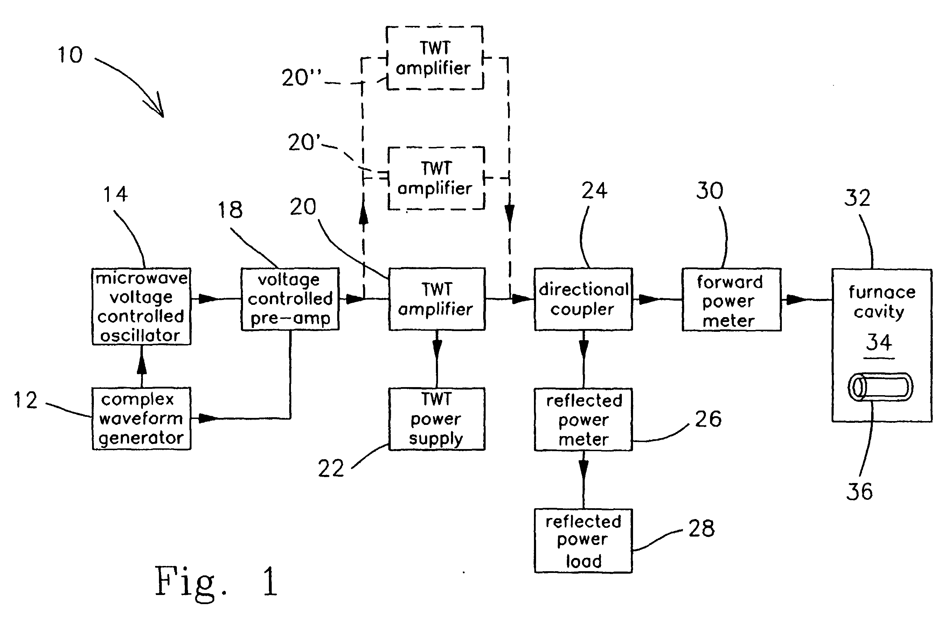

Figure 1 illustrates schematically the preferred embodiment of the variable frequency microwave heating apparatus **10** of the present invention, wherein a selected workpiece **36** is to be processed. Applicable processes include, but are not limited to, heat treatment, sterilization, sintering, plasma processing, ore processing, polymerization, etching, and preparing films. It will be understood that the term "workpiece" as used within the present disclosure refers to a selected material or composition of materials. The term "workpiece" may further include such selected material or composition of materials wherein at least one of the materials is undergoing at least one phase change and is, therefore, in more than one phase at a given time.

A microwave voltage-controlled oscillator **14** is provided for generating a low-power microwave signal for input to the microwave furnace **32**. A complex waveform generator **12** provides the controlling voltage to the voltage-controlled oscillator **14**, causing the voltage-controlled oscillator to sweep a given range of frequencies, operate in pulse mode, modulate the frequency of the microwave signal, and produce various complex waveforms.

The complex waveform generator **12** of the preferred embodiment may be operated in the pulse mode using an internal pulse generator or it can be pulsed externally. An internal modulator is provided for wide band modulation. The internal modulator may operate in the AM mode or in the FM mode.

The microwave voltage controlled oscillator **14** generates a microwave signal of a frequency determined by the voltage applied to the voltage controlled oscillator **14** by the waveform generator **12.** It may be desirable to modulate the frequency of the microwave as a selected material may efficiently couple with a particular frequency and require a high voltage level, whereas a second material may couple more efficiently at a different frequency and at a lower, or higher, voltage level. Thus, the microwave voltage-controlled oscillator **14** may be used in combination with the complex waveform generator **12** to modify the frequency of the generated microwave.

It will be seen that the number of possible combinations of frequencies and power levels is numerous. Further, with the ability of such frequency and amplitude modulation, it will be seen that the processing of a workpiece **36** may be accomplished by alternating the frequency and amplitude of the microwave in order to achieve maximum processing efficiency. The modulations may occur at such rates as to be undetectable by the workpiece **36**, yet creating maximum processing efficiency for each material and material phase.

A first amplifier **18** may be provided to amplify the power of the signal output from the microwave voltage-controlled oscillator **14.** The first amplifier **18** of the preferred embodiment is voltage-controlled, therefore the gain is adjustable such that the amplitude of the output is selectable by the operator. During operation of the variable frequency microwave heating apparatus **10,** the operator may instantaneously adjust the first amplifier **18** such that the amplitude of the microwave may be correspondingly adjusted. The control voltage for the first amplifier **18** can also be supplied by the complex waveform generator **12**, allowing the amplitude of the signal output to be modulated in any desired way.

A second amplifier **20** is provided for processing the signal output by the first amplifier **18**, or from the microwave voltage-controlled oscillator **14** when a first amplifier **18** is not employed. The second amplifier **20** outputs the microwave signal input to the multi-mode furnace cavity **34** and to which the workpiece **36** is subjected. In the preferred embodiments, the second amplifier **20** may be any one of a helix traveling-wave tube (TWT), a coupled-cavity TWT, a ring-loop TWT, a ring-bar TWT, a klystron, a twystron, or a gyrotron.

The TWT **20** is a linear beam device wherein a signal having a selected frequency and wave form is amplified and output. The TWT **20** has the capability of amplifying any selected frequency or waveform within a range or bandwidth defined by the configuration of the TWT **20.** Particularly, the physical geometry of the TWT **20** limits the frequency range, such that as a high limit is reached, a counteracting signal is encountered, giving the appearance of a second wave.

In order to achieve a frequency higher or lower than that capable of the TWT **20** incorporated in a particular configuration, the internal geometry of the TWT **20**, especially the pitch of the helix **40**, is changed. In the latter mentioned TWT **20**, a new frequency range will be defined. It will be seen, therefore, that a variety of configurations of TWT's **20** is possible such that a broader range of frequencies may be achieved. To this end, the TWT's **20** of the present invention are designed to be selectively removable from the variable frequency microwave heating apparatus **10** and interchangeable with other such TWT's **20**. Hence, a single microwave voltage-controlled oscillator **14,** microwave furnace **32**, and microwave furnace cavity **34** may be used with a variety of TWT's **20,** thus allowing a series of identical tests to be performed with the microwave frequency being substantially the only variable. One TWT **20** may define a frequency range of 4 GHz to 8 GHz, while another TWT **20'** defines a frequency range of 8 GHz to 16 GHz. Still another TWT **20''** may define a third frequency range. Interchanging TWT **20** with TWT **20'** defines a total range from 4 GHz to 16 GHz. One such TWT **20** defining a range of 4 GHz to 8 GHz is the Model T-1096 G/H Band Helix TWT manufactured by Microwave Laboratories, Inc. Specifications for the Model T-1096 are listed in Table 1.

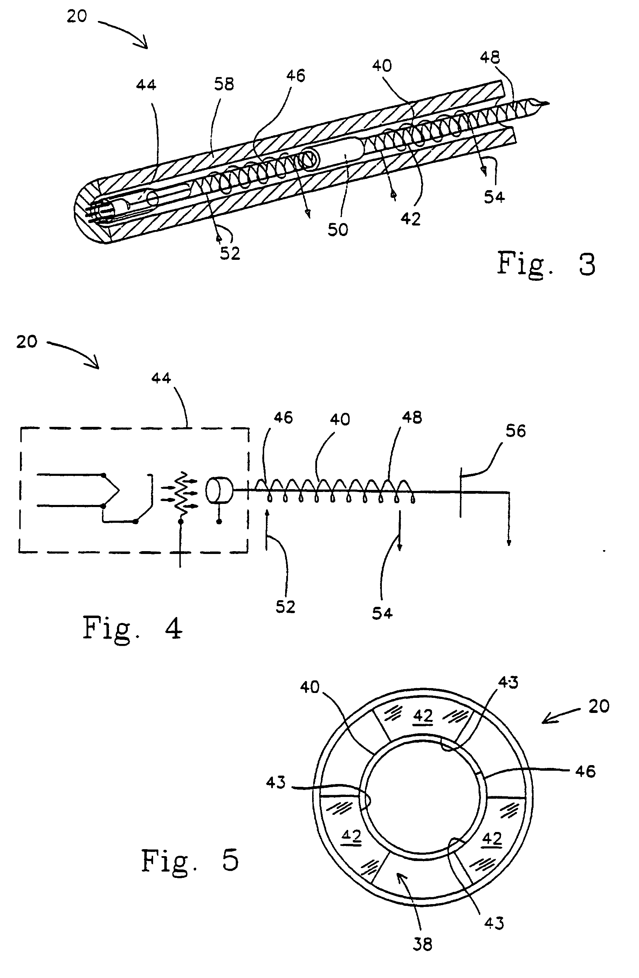

As earlier mentioned, the traveling wave tube **20** is a linear beam device characterized by a traveling electric field which continuously extracts energy longitudinally. along the path of an electron beam. As shown graphically in Figure 3 and diagrammatically in Figure 4, a typical TWT **20** is constructed with an electron gun assembly **44** attached to the first end **46** of a single-wire helix **40.** The gun assembly **44** produces a focused beam of electrons which is directed through the center of the helix **40.** Tapered carbon attenuators **50**, integral to the helix **40**, serve as directional couplers preventing reflections from passing back to the tube input. Rf input and output windings **52,54** are placed at the cathode and collector ends **46,48**, respectively, of the helix **40.**

**Table 1.**

| Specifications for the T-1096 G/H Band Helix TWT | | | | |
|---|---|---|---|---|
| RF Performance | Min | Max | Typ | Unit |
| Power Output | 63.0 | 65.0 | 63.5 | dbm |
| Frequency Range | 4.0 | 8.0 | | Ghz |
| Harmonic Content | - | -3.0 | -6.0 | dbc |
| Gain at rated Power | 25.0 | 37.0 | 30.0 | db |

| Electrical Parameters | | | | |
|---|---|---|---|---|
| Helix Voltage | -8.0 | -9.0 | -8.4 | kV |
| Anode Voltage (WRTC) | 0.0 | +9.0 | - | kV |
| Collector Voltage (WRTC) | +6.2 | +6.8 | +6.5 | kV |
| Filament Voltage (WRTC) | 12.4 | 13.2 | 12.8 | V |
| Solenoid Voltage | 35.0 | 57.0 | 48.0 | V |
| Vac-Ion Voltage | +3.5 | +5.0 | +3.5 | kV |
| Helix Current | - | 25.0 | 15.0 | mA |
| Anode Current | - | 5.0 | - | mA |
| Collector Current | 0.9 | 1.8 | 1.2 | A |
| Filament Current | 1.2 | 2.0 | 1.4 | A |
| Solenoid Current | 21.0 | 26.0 | 25.0 | A |
| Vac-Ion Current | - | 0.01 | - | mA |
| Prime Power | | 10.7 | 9.2 | kW |

A collector **56**, charged positively, is located at the second end **48** of the helix **40**. The collector **56** provides the source of energy for the operation of the TWT **20**. Beam focusing and containment magnets **58** surround the entire assembly of the TWT **20**.

Electrons traversing the axis of the helix **40** interact with the rf wave propagating along the helix **40** such that energy is transferred from the electron beam to the rf wave. This interaction is continuous and cumulative, increasing the amplitude of the rf signal as it propagates along the helix **40.**

The second amplifier **20** of the preferred embodiment includes an internal cooling device **38** designed to dissipate the heat collected by the second amplifier **20** during normal operation. Particularly, in the event of a helix TWT, the helix of the TWT **20** and the helix supports **42** are fabricated from selected materials in order to perform this function. The helix TWT **20** of the preferred embodiment is provided with a helix **40** fabricated from flat copper wire. A plurality of retainers **42** are positioned in parallel fashion about the longitudinal axis of the helix TWT **20** about which the copper wire is wrapped, the retainers **42** serving to retain the helix **40** defined by the copper wire and further to dissipate the heat transferred to the copper wire during operation of the helix TWT **20**. In the preferred embodiment the retainers **42** define a cross-section with at least one substantially flat side **43,** the flat side **43** being in substantial contact with the copper wire.

Further, the retainers **42** of the preferred embodiment are fabricated from beryllium oxide. It is known that even though beryllium oxide is an electrical insulator, it is also an excellent conductor of heat. The copper wire defining a flat cross-section and substantially contacting the flat side **43** of the retainers **42** provides for an efficient and thorough dissipation of the heat transferred to the copper wire, thus providing a cooling device **38** for the internal portion of the helix TWT **20** and hence extending the life of the helix TWT **20.**

A power supply **22** is provided for the operation of the second amplifier **20.** Though not individually depicted in the figures, the preferred power supply **22** is a direct current source consisting of a precision-regulated cathode power supply and a less-regulated collector high voltage supply. Output regulation for the cathode supply is accomplished through a tube regulator circuit using a tetrode tube. One such tube is the Eimac 4PR400A tube. Regulation for the collector supply and the cathode raw supply is accomplished with an electromechanical regulator. The collector supply of the preferred embodiment is provided with two switch plates for the selection of output ranges. A typical power supply **22** used to power the second amplifier **20** is the Universal Voltronics Model BRE-15-140-ML High Voltage Power Supply. The specifications of the Universal Voltronics power supply are listed in Table 2.

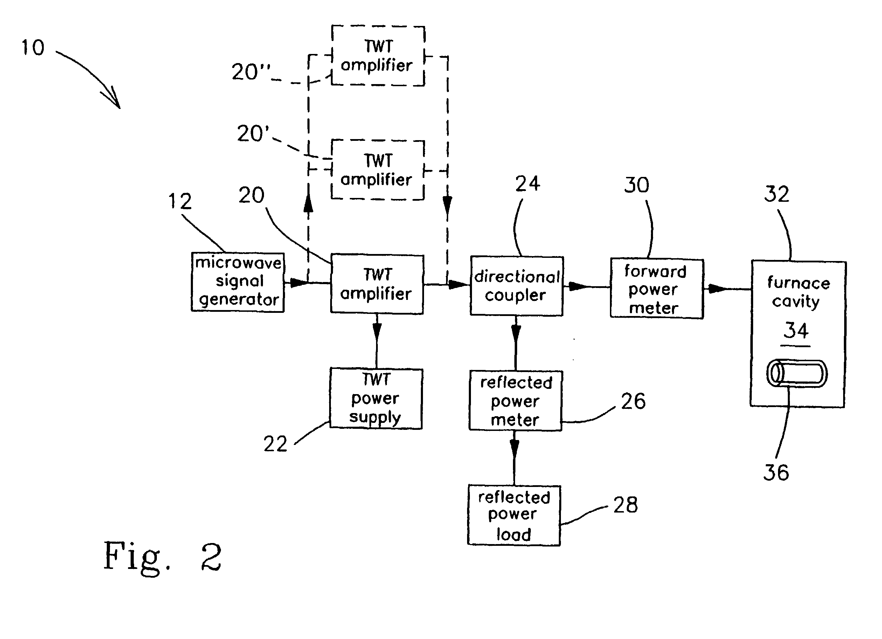

As shown in Figure 2, the variable frequency microwave heating apparatus **10** may be operated without the use of a microwave voltage-controlled oscillator **14** and a first amplifier **18.** In this embodiment, the microwave signal generator **12** is employed independently to generate a selected signal and is output directly without further modification. One such microwave signal generator **12** is the Model 6724 signal generator manufactured by Wiltron. In this embodiment, the amplitude modulation is performed within the power supply **22** of the second amplifier **20**.

Referring to Figures 1 and 2, a directional coupler **24** is provided for detecting the direction of a signal and further directing the signal depending on the detected direction. The directional coupler **24** is provided proximate the collector end of the second amplifier **20.** A signal received from the second amplifier **20** is directed toward the microwave cavity **32.** A signal received from the direction of the microwave cavity **32** is directed toward a reflected power load **28**. The directional coupler **24** thus provides a means

**Table 2.**

| Electrical Specifications for the Universal Voltronics Model BRE-15-140-ML Power Supply | |
|---|---|
| HELIX SUPPLY | |
| output Voltage | 500V - 15KVDC |
| Output Current | 140 mADC |
| Polarity | Negative Output |
| Ripple | .01% rms @ 15KVDC, 140mADC |
| Regulation, load | +0.1% from no load to full load @ maximum output |
| Regulation, line | +0.1% for line voltage from 190-230 VAC @ maximum output |

| COLLECTOR SUPPLY | |
|---|---|
| Output Voltage and Current | |
| Mode I (parallel) | 0-5KV @ 4000mA |
| Mode II (series) | 0-10KV @ 2000mA |
| Polarity | Positive output, negative tied to helix supply |
| Ripple | 3% rms @ 10KVDC, 2000mA |
| Regulation, load | +2% from no load to full load @ maximum output |
| Regulation, line | +2% for line voltage from 190-230 VAC @ maximum output |

| CROWBAR (connected across the collector supply) | |
|---|---|
| Response Time | 5 microseconds |

| SYSTEM | |
|---|---|
| Input Voltage | 190-230 VAC phase to phase, 3 phase, 60Hz, 30KVA. |
| Power connection | 5 position terminal board (3 phase neutral ground) |
| Output Connectors | 10-32 studs for collector, cathode & helix |
| controls Connector | 90 pin Elco connector |

whereby a reflected signal - that is, power not absorbed by the workpiece **36** and therefore directed back toward the source **20** - is diverted away from the second amplifier **20** in order to protect the second amplifier **20** from power unabsorbed by the workpiece **36.** The reflected power load **28** of the preferred embodiment is water-cooled for the dissipation of heat collected through the reflection of power from the microwave cavity **32.**

A first power meter **30** is provided for measuring the power delivered to the microwave cavity **32**. The first power meter **30** is used in conjunction with a second power meter **26** positioned to measure reflected power from the microwave furnace **32** in order to monitor the efficiency of the microwave furnace and to insure that reflected power is dissipated in the reflected power load **28** and not by the second amplifier **20.**

The signal output by the second amplifier **20** is introduced into the microwave cavity **34** for absorption by the selected workpiece **36**. Typically, the introduced signal is not completely absorbed by the workpiece **36** and is therefore reflected back toward the second amplifier **20,** having no other path to follow.

The reflected signal reaches the directional coupler **24** and is there diverted toward the second power meter **26** and finally to the reflected power load **28.** The reflected power is dissipated in the reflected power load **28,** as previously mentioned, in an attempt to protect the longevity of the second amplifier **20**. The reflected power load **28** may also be used to test the functionality of the system by removing all workpieces **36** from the furnace cavity **34**, thus directing the entire load from the second amplifier **20** into the reflected power load **28.** Comparisons can be made of the power received by the reflected power load **28** and the power delivered from the second amplifier **20** to determine any system losses.

The magnitude of the reflected power is detected by the second power meter **26**. This magnitude may be used to determine the efficiency of the instant frequency of the microwave introduced into the microwave cavity **34.** A lower reflected power will indicate a more efficient operating frequency due to the higher absorption rate of the selected workpiece **36**.

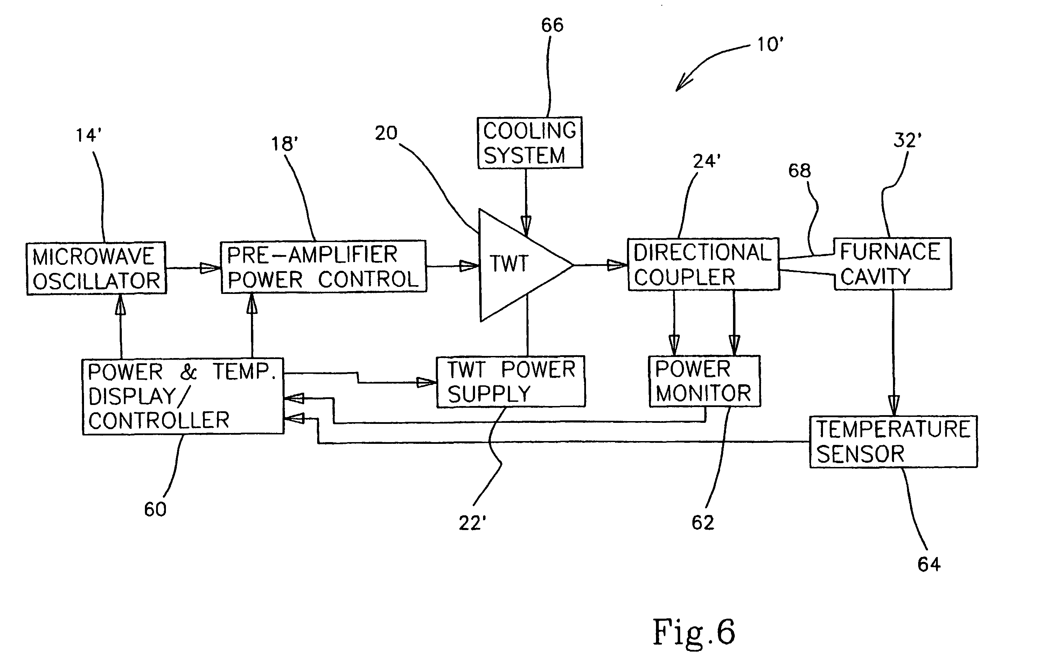

Illustrated in Figure 6 is an alternate embodiment of the variable frequency microwave heating apparatus **10'.** In this embodiment, a power and temperature display and controller **60** receives input from a power monitor **62** and a temperature sensor **64.** The power monitor **62** receives input from the directional coupler **24'** and serves the same basic functions as the reflected and forward power meters **26,30** incorporated in the previously described embodiment. The power and temperature display and controller **60** further serves to control the microwave oscillator **14',** the pre-amplifier power control **18'**, and the TWT power supply **22'.** A cooling system **66** is provided for cooling at least the TWT **20** during operation thereof.

A tapered waveguide coupler **68** may be provided to enhance the efficiency with which the broadband microwave energy is coupled into the microwave cavity. By acting as an impedance transformer between the transmission line from the directional coupler **24'** and the microwave cavity **32'**, this transition increases the percentage power coupled into the microwave cavity **32'**. In addition, for applications in which the microwave energy must be coupled into a microwave cavity **32'** in which reactive gases are present, the tapered waveguide **68** provides a means of reducing the power density of the microwave energy at the interface between the microwave input window and reactive gases, thus preventing the formation of plasma discharges at the microwave input window.

The microwave heating apparatus **10** described above includes a helix TWT amplifier **20**. However, it will be understood that many other microwave sources **20** may be used in accordance with other aspects of the present invention. Table 3 below gives typical characteristics of some other suitable microwave sources **20.**

**Table 3 -**

| Characteristics of Some Suitable Microwave Sources: | | | | | |
|---|---|---|---|---|---|
| Source Type | Frequency Range (GHz) | Band-width (%) | Peak Output Power (kW) | Average Output Power (kW) | Overall Eff. (%) |
| Ring-loop TWT | .5-20 | 5-15 | 1-20 | .05-.6 | 30-45 |
| Ring-bar TWT | .5-20 | 10-20 | 3-30 | .08-.9 | 30-45 |
| Coupled-cavity TWT | .5-300 | 5-15 | 50-5000 | 1-300 | 40-60 |
| Klystron | .5-70 | 5-8 | 100-8000 | 1-5000 | 40-70 |
| Crossed-field Amp | .5-20 | 15-40 | 100-3000 | 1-300 | 30-50 |

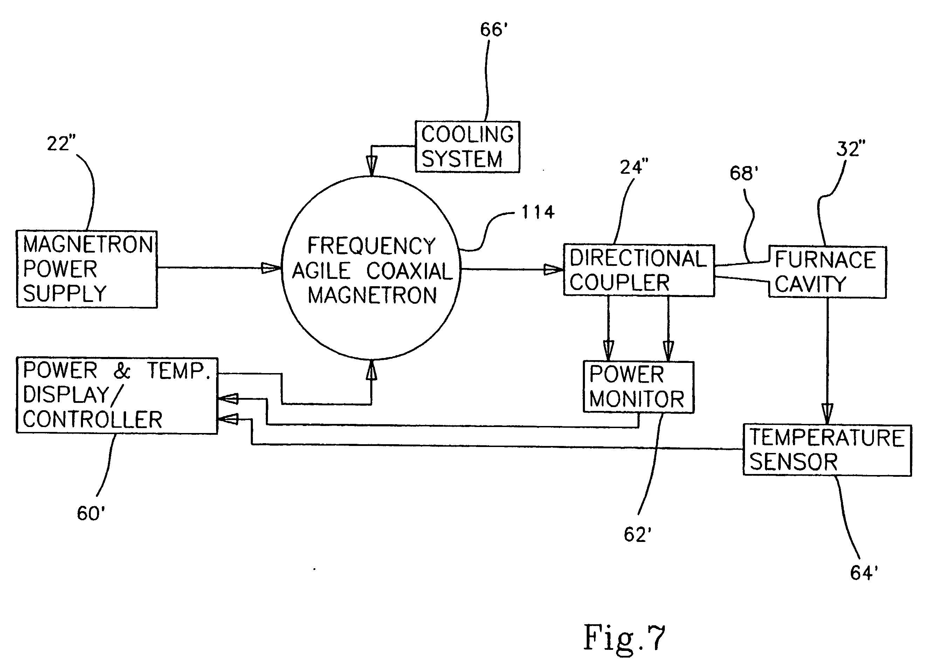

Illustrated in Figure 7 is an alternate embodiment of the variable frequency microwave heating apparatus **10** of the present invention. In this alternate embodiment, a high-power oscillator **114** such as a frequency-agile coaxial magnetron is substituted for the microwave oscillator **14,** the pre-amplifier power control **18** and the TWT **20** of the previously described embodiments. The magnetron **114** of the preferred embodiment has a usable bandwidth of at least 5% of its center frequency. The magnetron **114** is frequency-controlled either manually or, preferably, through a closed-loop, voltage-based feedback control system. In such a feedback control system, a low-level (0 to 10 V) signal is used to activate a servo-mechanism in the magnetron **114** which "tunes" the magnetron **114** from one frequency to another by precise repositioning of a plunger plate in the magnetron's coaxial cavity.

From the foregoing description, it will be recognized by those skilled in the art that a variable frequency microwave heating apparatus **10** offering advantages over the prior art has been provided. Specifically, the microwave heating apparatus **10** used in accordance with the present invention provides a means for adjusting the frequency of the microwaves introduced into a cavity **34** for sintering purposes, or as otherwise required. It will be seen that the microwave heating apparatus **10** is useful in testing the processing characteristics of selected materials with respect to microwave frequency. Such test will enable the design of a microwave furnace **32** with a microwave source which generates microwaves at the determined frequency.

It will further be seen that the microwave heating apparatus **10** is useful as a production tool in that the frequency of the microwaves may be varied for different materials or material phases. The frequency modulation may be performed during the operation of the microwave heating apparatus **10** in order to accommodate various materials and material phases. Further, the frequency modulation capability of the present invention serves as a method of mode stirring for creating a more uniform power distribution in relatively small microwave cavities **34**.

The efficiency of the variable frequency microwave heating apparatus **10** has been displayed in various tests performed in the development process. Typical testing configurations and results have been described in the afore-mentioned co-pending application Serial Number 07/792,103, which is incorporated herein by reference.

The various embodiments of microwave heating apparatuses **10** as heretofore described are used in the method of the present invention. For purposes of the present method, the second amplifier **20** of the preferred embodiment is capable of outputting two microwave signals simultaneously, with the first being a low-power signal and the second being a high-power signal. The low-power microwave signal is used in the method of the present invention as a diagnostic signal, while the high-power signal is used for processing the workpieece **36.** Alternatively, the low-power and high-power signals may be derived from separate sources.

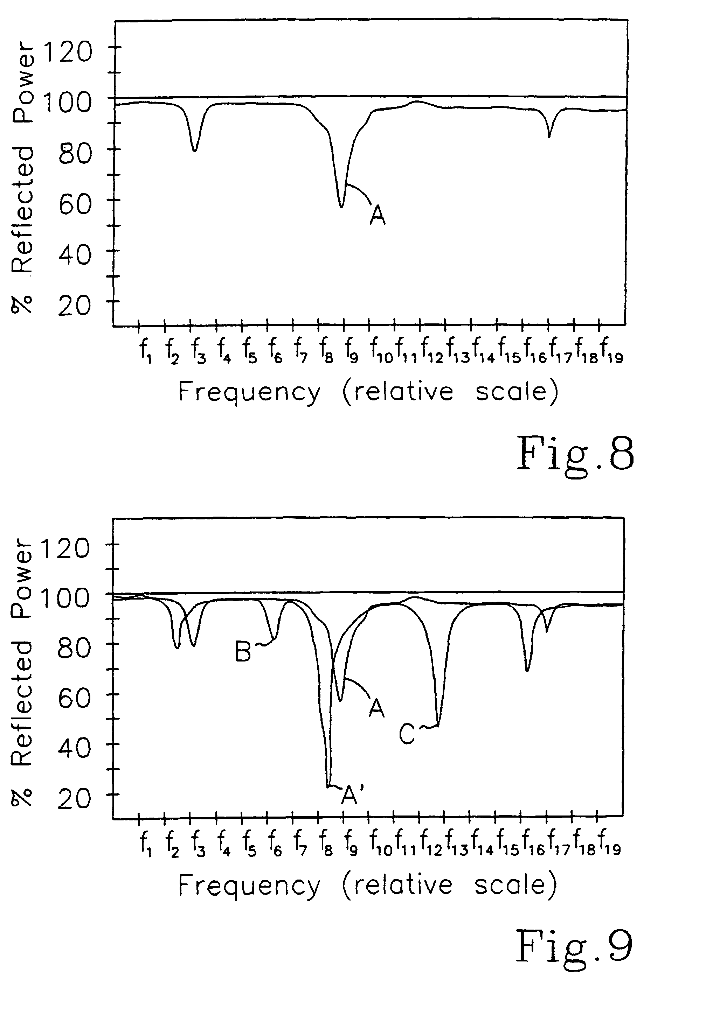

In the method of the present invention, the second amplifier **20** is first operated at a low power level while the microwave cavity **34** remains empty. In the case of the helix TWT **20**, for example, the initial operating power level may be on the order of one to ten watts (1-10 W). In this case, the helix TWT **20** is used to sweep the empty microwave processing cavity **34** over the frequency range to be studied. The power reflected through the directional coupler **24** is then measured to determine a percent of power transmitted to the cavity **34** and reflected back toward the helix TWT **20**. Measurements are taken to determine the reflected power as a function of frequency, from which the resonant modes of the microwave processing cavity **34** are quickly and accurately determined. Typical of these measurements are graphically illustrated in Figure 8. Further, by comparing reflected power at the various cavity modes, the optimum cavity mode can be immediately identified, such as at A in Figure 8. The optimum cavity mode is determined by the minimum percentage of reflected power, or the maximum percentage of power absorbed within the microwave cavity **34.**

The sample **36** to be processed, whether a gas, liquid or solid sample, is then placed into microwave cavity **34.** The frequency is swept again, only at a low power level. The presence of the sample in the microwave cavity **34** has the effect of shifting the mode pattern down in frequency, which is attributable to the presence of a volume in the microwave cavity **34** whose dielectric constant is greater than unity. In addition to the downward mode shift, additional modes become apparent, which is reflective of the resonant frequencies of the workpiece **36**. The new modes are due to molecular resonances for gaseous workpieces **36** and to form factor and shape resonances for the liquid and solid workpieces **36** and represent efficient frequencies at which to couple the microwave power into the reaction chemistry or sample. Figure 9 illustrates the effect of the addition of the workpiece **36** within the microwave cavity **34.** As illustrated and as previously discussed, the mode pattern of the empty cavity **34** has been shifted lower in frequency and additional modes due to the workpiece **36** have been detected. The newly detected modes B and C are attributed to the addition of the workpiece **36,** with mode C being the more efficient in terms of percentage reflected power.

The initial resonance frequency at which the workpiece **36** is to be processed is, in the preferred method, determined as that frequency at which the most efficient mode occurs. The output power is then increased to begin the microwave processing. For example, to create the plasma or heat the workpiece **36,** the above-referenced MLI Model T-1096 TWT can produce up to 3 kW of continuous wave (CW) power. Under high power conditions, the workpiece **36** can exhibit far different properties than when the system is cold. In the case of the plasma, large densities of electrons and ions, as well as a spectrum of product species representative of the equilibrium concentrations but also including possibly non-equilibrium metastable species, are present. In addition, the gas is "hot," and the various species are not homogeneously distributed within the microwave cavity **34.** In the case of the sample to be heated, the dielectric constant of the material is a function of the temperature of the material and, thus, changes as the sample is heated. In both cases, these changed conditions can affect the mode pattern within the cavity **34,** causing the frequency of the desired resonant mode to drift.

Due to the drift of the optimum resonant mode, graphical illustrations of percentage reflected power versus frequency will change accordingly. Thus, monitoring such reflected power yields the ability to maintain optimum coupling. In the method of the present invention, the percentage reflected power is monitored over a narrow frequency range near the desired mode, thus allowing the efficiency of the process to be maintained at a maximum.

Making use of the capability of the TWT **20** to handle multiple, simultaneous signals at different frequencies, while driving the plasma or heating the workpiece **20** at a high power level using the initial resonant frequency of choice, the microwave chamber **34** is simultaneously probed with a low-power signal over the entire frequency range. The percentage reflected power versus frequency is then determined for this low-power, probe signal. The high-power mode spectrum is then compared with the low-power mode spectrum, which is ground state. A comparison of the mode spectrums illustrates the effectiveness of the resonant frequency of choice. Thus, a more appropriate, high-power resonant frequency can be chosen. This method will in some instances involve the discovery and use of a mode which is non-existent under the initial low-power condition or which might not appear optimum under the low-power testing. In the case of the plasma, the non-existence of the now-optimum mode may be due to a relatively weak absorbance at low power due to the population of relevant species. As will be appreciated by those skilled in the art, many other factors may influence the optimum resonant frequency as well.

While continuing to drive a mode selected using the initial low-power criteria, a second resonant frequency characteristic of the hot plasma or sample may be simultaneously driven at high power. For a TWT **20** having an output of 3 kW, two signals at a power level in the range of 1 to 1.5 Kw each can be simultaneously driven. Thus, the processing of the workpiece **36** may be performed at two modes simultaneously, as opposed to one mode being used to process with the other used strictly for monitoring.

In a microwave-associated deposition process, for deposited materials such as diamond which have a resonance within the frequency range of the TWT **20**, a low-power frequency probe can be used as a direct sensor to monitor the film growth. Simultaneously, a high-power signal is used to procure the deposition. As described previously, a TWT **20** having the capability of outputting two signals simultaneously may be used for this purpose. By correlating the strength of the absorption at that frequency with film thickness, in situ sensing for a degree of intelligent process control is achieved.

Alternatively to the direct sensing of the film growth as indicated, indirect methods may also be used. Such instances occur especially when the optimum resonant frequency for the film is outside the frequency range of the TWT **20.** One such example of an indirect technique for sensing film deposition includes placing a body of a dielectric material **37** in the microwave cavity **34** such that the dielectric body **37** has a resonant frequency within the frequency range of the TWT **20**. As the dielectric body **37** is coated with a layer **39,** the change in the resonant frequency is used as a measure of the coating thickness **39'** on the workpiece **36.**

In another method of indirectly sensing film deposition, a piezo-electric crystal is substituted for the dielectric body **37**. The piezo-electric crystal has a resonant frequency which changes as the deposited film thickness increases. The crystal is excited directly by the TWT **20** or by an external electronic means, with the response being measured during the low-power microwave sweep.

The frequency range of the TWT **20** allows a high degree of process control information to be derived by examining the reflected power at many frequencies simultaneously. The values of reflected power at each of *n* frequencies can be expressed as a vector of dimension *n*. For example, the graphical illustrations of reflected power spectra shown in Figures 8 and 9 can easily be represented as vectors of any desired dimensionality, limited only by the frequency resolution of the measurement system used. As shown in the figures, discrete frequencies can be selected (indicated as f₁, f₂, ... , f₁₉) and the values of reflected power at these frequencies define a vector in "frequency space". To illustrate this method, one might define vectors using the reflected power at frequencies f₂, f₃, f₆, f₈, f₉, f₁₂, f₁₅ and f₁₆. The empty cavity would correspond to the vector [95, 75, 95, 60, 70, 95, 95, 80] whereas the loaded cavity would correspond to the vector [75, 95, 80, 20, 90, 55, 95, 65] and so on. Those skilled in the art will appreciate that the two vectors given above are easily distinguished from one another. Any number of such vectors, or signatures, are measurable, with each representing a different set of process conditions. These signatures are then used to train a neural network or other pattern classifier. The pattern classifier monitors the process in real time and provides a degree of active control by automatically adjusting process parameters to maintain those conditions which yield the signature characteristic of the desired operating regime. It will be understood by those skilled in the art that many suitable pattern classification techniques exist, including those using analog and digital neural networks. Further, it will be understood by such artisans that these pattern classification techniques can be implemented either as application-specific hardware or as software operating within a general-purpose computer or device.

While several preferred embodiments of the variable frequency microwave heating apparatus have been shown and described, it will be understood that such descriptions are not intended to limit the disclosure, but rather it is intended to cover all modifications and alternate methods falling within the scope of the invention as defined in the appended claims.

## Claims

1. A variable frequency microwave heating apparatus (10) for processing selected materials comprising:
a microwave furnace (32) including a multi mode cavity (34) for processing the selected materials;
means (12) for simultaneously irradiating the selected materials with at least two microwave signals with at least two frequencies being defined by the at least two microwave signals to produce a plurality of reflected frequencies;
means (26) for measuring microwave signals within the multi mode cavity (34), the measured signals including at least two of the plurality of reflected frequencies to obtain diagnostic information;
means for processing the diagnostic information obtained from the measured microwave signals; and
means for controlling (24) at least one of the at least two frequencies based upon results from the processed diagnostic information obtained from the measured microwave signals.

2. A variable frequency microwave heating apparatus of claim 1, wherein the means for simultaneously irradiating the selected materials comprises a microwave signal generator (12) for generating at least a first signal with a selected waveform, frequency, and amplitude and a second signal with a selected waveform, frequency, and amplitude;
a signal amplifier (20) for amplifying said first and second signals, said signal amplifier producing a first set and a second set of microwaves within a selected frequency range and defining a centre frequency, said first set of microwaves having an associated power with a selected amplitude, said second set of microwaves having an associated power with a selected amplitude, said signal amplifier comprising a microwave electron device (20,20',20");
a power supply (22) for supplying power to said signal amplifier (20);
a transmitter for conveying said first and second sets of microwaves into said microwave furnace;
a signal director (24) for directing said first and second sets of microwaves into said microwave furnace (32) and microwaves reflected from said microwave furnace (32) into a reflected load dissipater (28), said reflected load dissipater for dissipating said microwaves reflected from said microwave furnace (32), said microwaves reflected from said microwave furnace (32) having an associated power and magnitude thereof;
the means for measuring microwave signals comprises a system monitor (26) for monitoring said magnitude of said power associated with said first and second sets of microwaves conveyed to said microwave furnace (32), said system monitor serving to measure reflected power at a plurality of frequencies wherein process diagnostic information may be obtained from at least two of said plurality of frequencies; and
the means for processing the diagnostic information comprises a data processor for processing output from said system monitor.

3. The variable frequency microwave heating apparatus (10) of claim 2, wherein said signal amplifier (20) defines a useful bandwidth of at least five percent of said signal amplifier centre frequency.

4. The variable frequency microwave heating apparatus of claim 2, wherein said microwave signal generator (12) is selected from the group consisting of a travelling wave tube, a twystron, a klystron, a crossed-field amplifier, a coaxial magnetron, and a gyrotron.

5. The variable frequency microwave heating apparatus of claim 2, wherein said data processor includes at least a neural network.

6. The variable frequency microwave heating apparatus of claim 2, wherein said system monitor includes at least a device for measuring microwave signals at a plurality of frequencies and said data processor includes at least a converter for converting said measured microwave signals into distinctive signatures and a device for at least classifying said signatures.

7. The variable frequency heating apparatus of claim 6, wherein said device for measuring microwave signals includes at least an analogue-to-digital converter.

8. The variable frequency microwave heating apparatus of claim 6, wherein said device for at least classifying said signatures includes at least a neural network.

9. The variable frequency heating apparatus of claim 2, wherein said system monitor includes at least an antenna received within said multi-mode cavity, said antenna being provided for transmitting microwave energy into said multi-mode cavity and receiving microwave energy from said multi-mode cavity.

10. The variable frequency microwave heating apparatus of claim 2, wherein said system monitor includes a frequency discriminator.

11. The variable frequency microwave heating apparatus of claim 10, wherein said frequency discriminator includes a device selected from the group consisting of high-pass filters, low-pass filters, band-pass filters, band-reject filters, spectrum analysers, tracking band-pass filters, band-reject filters, spectrum analysers, tracking band-pass filters, tracking band-reject filters, scalar network analysers, vector network analysers, and frequency synthesisers.

12. The variable frequency microwave heating apparatus of claim 2, wherein said power supply is adjustable whereby said amplitude of said signal generated by said signal generator is selectively modulated.

13. The variable frequency microwave heating apparatus of claim 2, further comprising a signal amplitude controller for selectively modulating said amplitude of said signal generated by said signal generator.

14. The variable frequency microwave heating apparatus of claim 2, wherein said output from said system monitor includes information related to at least one selected physical property of said selected materials being processed.

15. The variable frequency microwave heating apparatus of claim 14, wherein said selected material being processed is a polymer and said at least one selected physical property includes at least one property selected from the group consisting of the degrees of polymerisation, curing, and cross-linking of said polymer.

16. The variable frequency microwave heating apparatus of claim 14, wherein said selected material being processed is a ceramic and said at least one selected physical property includes at least one property selected from the group consisting of density, temperature, grain size and distribution of phases.

17. The variable frequency microwave heating apparatus of claim 14, wherein at least a portion of said selected material being processed is transformed into a plasma state and said at least one selected physical property includes state properties of said plasma.

18. The variable frequency microwave heating apparatus of claim 2, wherein said signal director is provided with a cooling device for dissipating heat accumulated through operation of said signal director.

19. A method for processing a selected material comprising the steps of:
a. placing said selected material in a variable frequency microwave heating apparatus (10) including a microwave furnace (32) including a multi-mode cavity (34);
b. simultaneously irradiating said selected material with at least two microwave signals with at least two frequencies being defined by said at least two microwave signals to produce a plurality of reflected frequencies;
c. measuring microwave signals within said multi-mode cavity said microwave signals measured including at least two of said plurality of reflected frequencies to obtain diagnostic information;
d. processing said diagnostic information obtained in said step of measuring microwave signals; and
e. controlling at least one of said at least two frequencies based upon results from said step of processing said diagnostic information obtained in said step of measuring microwave signals.

20. The method of claim 19, wherein said step of irradiating said selected material with microwaves of varying frequencies is performed within said variable frequency microwave heating apparatus, said variable frequency microwave heating apparatus comprising:
a first microwave signal generator for generating at least a first signal with a selected waveform, frequency, and amplitude;
a second microwave generator for generating at least a second signal with a selected waveform, frequency and amplitude;
a first signal amplifier for amplifying said first signal, said first signal amplifier producing a first set of microwaves within a selected frequency range and defining a centre frequency, said first set of microwaves having an associated power with a selected amplitude, said first signal amplifier comprising a first microwave electron device;
a second signal amplifier for amplifying said second signal, said second signal amplifier producing a second set of microwaves within a selected frequency range and defining a centre frequency, a said second set of microwaves having an associated power with a selected amplitude, said second signal amplifier comprising a second microwave electron device;
a first power supply for supplying power to said first signal amplifier;
a second power supply for supplying power to said second signal amplifier;
a transmitter for conveying said first and second sets of microwaves into said microwave furnace;
a signal director for directing said first and second sets of microwaves into said microwave furnace and microwaves reflected from said microwave furnace into a reflected load dissipater, said reflected load dissipater for dissipating said microwaves reflected from said microwave furnace, said microwaves reflected from said microwave furnace having an associated power and magnitude thereof;
a system monitor for monitoring said magnitude of said power associated with said first and second sets of microwaves conveyed to said microwave furnace and said magnitude of said power associated with said microwaves reflected from said microwave furnace, said system monitor serving to monitor an efficiency of said variable frequency microwave heating apparatus; and
a data processor for processing output from said system monitor.

21. The method of claim 19, wherein said step of irradiating said selected material with microwaves of varying frequencies is performed within said variable frequency microwave heating apparatus, said variable frequency microwave heating apparatus comprising:
a microwave signal generator for generating at least a first signal with a selected waveform, frequency, and amplitude and a second signal with a selected waveform, frequency and amplitude;
a signal amplifier for amplifying said first and second signals, and signal amplifier producing a first set and a second set of microwaves within a selected frequency range and defining a centre frequency, said first set of microwaves having an associated power with a selected amplitude, said second set of microwaves having an associated power with a selected amplitude, said signal amplifier comprising a microwave electron device;
a power supply for supplying power to said signal amplifier;
a transmitter for conveying said first and second sets of microwaves into said microwave furnace;
a signal director for directing said first and second sets of microwaves into said microwave furnace and microwaves reflected from said microwave furnace into a reflected load dissipater, said reflected load dissipater for dissipating said microwaves reflected from said microwave furnace, said microwaves reflected from said microwave furnace having an associated power and magnitude thereof;
a system monitor for monitoring said magnitude of said power associated with said first and second sets of microwaves conveyed to said microwave furnace and said magnitude of said power associated with said microwaves reflected from said microwave furnace, said system monitor serving to monitor an efficiency of said variable frequency microwave heating apparatus; and
a data processor for processing output from said system monitor.

## Patentansprüche

1. Mikrowellenheizvorrichtung (10) mit variabler Frequenz für das Verarbeiten ausgewählter Materialien, die aufweist:
einen Mikrowellenofen (32) einschließlich einer Mehrfachmodenkavität (34) für die Verarbeitung der ausgewählten Materialien,
eine Einrichtung (12) für das gleichzeitige Bestrahlen der ausgewählten Materialien mit zumindest zwei Mikrowellensignalen mit zumindest zwei Frequenzen, die durch die zumindest zwei Mikrowellensignale festgelegt werden, um eine Mehrzahl von reflektierten Frequenzen zu erzeugen,
eine Einrichtung (26) für das Messen der Mikrowellensignale innerhalb der Mehrfachmodenkavität (34), wobei die gemessenen Signale zumindest zwei der Mehrzahl von reflektierten Frequenzen beinhalten, um diagnostische Informationen zu erhalten,
eine Einrichtung für die Verarbeitung der diagnostischen Informationen, die aus den gemessenen Mikrowellensignalen erhalten werden, und
eine Einrichtung für das Steuem (24) von zumindest einer der zumindest zwei Frequenzen basierend auf den Ergebnissen der verarbeiteten diagnostischen Informationen, die aus den gemessenen Mikrowellensignalen erhalten werden.

2. Mikrowellenheizvorrichtung mit variabler Frequenz nach Anspruch 1, wobei die Einrichtung für das gleichzeitige Bestrahlen der ausgewählten Materialien aufweist:
einen Mikrowellensignalgenerator (12) für das Erzeugen zumindest eines ersten Signals mit einer ausgewählten Wellenform, Frequenz und Amplitude, und eines zweiten Signals mit einer ausgewählten Wellenform, Frequenz und Amplitude,
einen Signalverstärker (20) für das Verstärken des ersten und des zweiten Signals, wobei der Signalverstärker einen ersten Satz und einen zweiten Satz Mikrowellen innerhalb eines ausgewählten Frequenzbereichs erzeugt und eine Zentralfrequenz festlegt, wobei der erste Satz von Mikrowellen eine zugehörige Leistung mit einer ausgewählten Amplitude hat, wobei der zweite Satz von Mikrowellen eine zugehörige Leistung mit einer ausgewählten Amplitude hat, wobei der Signalverstärker eine Mikrowellenelektroneneinrichtung (20, 20', 20") aufweist,
eine Energieversorgung (22) für das Bereitstellen von Energie zu dem Signalverstärker (20),
eine Übertragung für das Weiterleiten des ersten und des zweiten Satzes von Mikrowellen in den Mikrowellenofen,
einen Signalleiter (24) für das Leiten des ersten und des zweiten Satzes von Mikrowellen in den Mikrowellenofen (32) und für das Leiten der Mikrowellen, die von dem Mikrowellenofen (32) reflektiert werden, in eine Einrichtung zum Ableiten der reflektierten Last (28), wobei die Einrichtung zum Ableiten der reflektierten Last für das Abführen der von dem Mikrowellenofen (32) reflektierten Mikrowellen vorgesehen ist, wobei die von dem Mikrowellenofen (32) reflektierten Mikrowellen eine verknüpfte Leistung und Stärke haben,
wobei die Einrichtung für das Messen der Mikrowellensignale einen Systemmonitor (26) aufweist für das Überwachen der Größe der Leistung, die mit dem ersten und dem zweiten Satz von Mikrowellen verknüpft ist, die zu dem Mikrowellenofen (32) übermittelt werden, wobei der Systemmonitor dazu dient, die reflektierte Leistung bei einer Mehrzahl von Frequenzen zu messen, wobei die Prozeßdiagnostikinformation von zumindest zwei der Mehrzahl von Frequenzen erhalten werden kann, und
wobei die Einrichtung für das Verarbeiten der diagnostischen Information einen Datenprozessor für das Verarbeiten des Ausgangs von dem Systemmonitor aufweist.

3. Mikrowellenheizvorrichtung (10) mit variabler Frequenz nach Anspruch 2, wobei der Signalverstärker (20) eine nutzbare Bandbreite von zumindest 5% der Zentralfrequenz des Verstärkers festlegt.

4. Mikrowellenheizvorrichtung mit variabler Frequenz nach Anspruch 2, wobei der Mikrowellensignalgenerator (12) aus der Gruppe ausgewählt wird, die besteht aus einer Wanderwellenröhre, einem Twystron, einem Klystron, einem Kreuzfeldverstärker, einem koaxialen Magnetron und einem Gyrotron.

5. Mikrowellenheizvorrichtung mit variabler Frequenz nach Anspruch 2, bei der der Datenprozessor zumindest ein neuronales Netzwerk beinhaltet.

6. Mikrowellenheizvorrichtung mit variabler Frequenz nach Anspruch 2, bei der der Systemmonitor zumindest eine Vorrichtung für das Messen von Mikrowellensignalen bei einer Mehrzahl von Frequenzen aufweist und der Datenprozessor zumindest einen Wandler für das Umwandeln der gemessenen Mikrowellensignale in unterschiedliche Signaturen und eine Einrichtung für das zumindest Klassifizieren der Signaturen beinhaltet.

7. Mikrowellenheizvorrichtung mit variabler Frequenz nach Anspruch 6, bei der die Vorrichtung für das Messen der Mikrowellensignale zumindest einen Analog-Digital-Wandler beinhaltet.

8. Mikrowellenheizvorrichtung mit variabler Frequenz nach Anspruch 6, bei der die Einrichtung für das zumindest Klassifizieren der Signaturen zumindest ein neuronales Netzwerk beinhaltet.

9. Heizvorrichtung mit variabler Frequenz nach Anspruch 2, bei der der Systemmonitor zumindest eine Antenne beinhaltet, die in der Mehrmoden-Kavität aufgenommen ist, wobei die Antenne bereitgestellt wird für das Übertragen von Mikrowellenenergie in die Mehrmoden-Kavität und für das ·Empfangen von Mikrowellenenergie aus der Mehrmoden-Kavität.

10. Mikrowellenheizvorrichtung mit variabler Frequenz nach Anspruch 2, bei der der Systemmonitor einen Frequenzunterscheider beinhaltet.

11. Mikrowellenheizeinrichtung mit variabler Frequenz nach Anspruch 10, bei der der Frequenzunterscheider eine Einrichtung aufweist, die aus der Gruppe ausgewählt wird, die besteht aus Hochpassfiltern, Tiefpassfiltern, Bandpassfiltern, Bandsperrfiltern, Spektrumanalysatoren, Abtastbandfiltern, Abtastbandsperrfiltern, skalaren Netzwerkanalysatoren, Vektornetzwerkanalysatoren und Frequenzsynthesizern.

12. Mikrowellenheizvorrichtung mit variabler Frequenz nach Anspruch 2, bei der die Energieversorgung einstellbar ist, wobei die Amplitude des Signals, das von dem Signalgenerator erzeugt wird, selektiv moduliert wird.

13. Mikrowellenheizvorrichtung mit variabler Frequenz nach Anspruch 2, die weiterhin einen Signalamplitudencontroller aufweist für das selektive Modulieren der Amplitude des Signals, das von dem Signalgenerator erzeugt wird.

14. Mikrowellenheizvorrichtung mit variabler Frequenz nach Anspruch 2, wobei die Ausgabe von dem Systemmonitor Information betreffend zumindest eine physikalische Eigenschaft der ausgewählten Materialien, die verarbeitet werden, beinhaltet.

15. Mikrowellenheizvorrichtung mit variabler Frequenz nach Anspruch 14, wobei das ausgewählte Material, das verarbeitet wird, ein Polymer ist und die zumindest eine ausgewählte physikalische Eigenschaft zumindest eine Eigenschaft beinhaltet, die aus der Gruppe ausgewählt wird, die besteht aus dem Grad der Polymerisierung, dem Grad der Aushärtung und dem Grad der Kreuzvemetzung der Polymere.

16. Mikrowellenheizvorrichtung mit variabler Frequenz nach Anspruch 14, wobei das ausgewählte Material, das verarbeitet wird, eine Keramik ist und die zumindest eine ausgewählte physikalische Eigenschaft zumindest eine Eigenschaft beinhaltet, die aus der Gruppe ausgewählt wird, die besteht aus der Dichte, der Temperatur, der Korngröße und der Verteilung der Phasen.

17. Mikrowellenheizvorrichtung mit variabler Frequenz nach Anspruch 14, bei der zumindest ein Teil des ausgewählten Materials, das verarbeitet wird, in einen Plasmazustand übertragen wird und die zumindest eine ausgewählte physikalische Eigenschaft Zustandseigenschaften des Plasmas beinhaltet.

18. Mikrowellenheizvorrichtung mit variabler Frequenz nach Anspruch 2, bei der der Signalleiter mit einer Kühleinrichtung ausgestattet ist für das Dissipieren von Wärme, die sich während des Betriebs des Signalleiters ansammelt.

19. Verfahren zur Verarbeitung eines ausgewählten Materials, das die Schritte aufweist,
a. Plazieren des ausgewählten Materials in einer Mikrowellenheizvorrichtung mit variabler Frequenz (10), die einen Mikrowellenofen (32) einschließlich einer Mehrfachmodenkavität (34) beinhaltet,
b. gleichzeitiges Bestrahlen des ausgewählten Materials mit zumindest zwei Mikrowellensignalen mit zumindest zwei Frequenzen, die durch die zumindest zwei Mikrowellensignale festgelegt werden, um eine Mehrzahl von reflektierten Frequenzen zu erzeugen,
c. Messen der Mikrowellensignale innerhalb der Mehrmodenkavität, wobei die gemessenen Mikrowellensignale zumindest zwei der Mehrzahl von reflektierten Frequenzen beinhalten, um diagnostische Informationen zu erhalten,
d. Verarbeiten der diagnostischen Information, die in dem Schritt des Messens der Mikrowellensignale erhalten wurde, und
e. Steuern von zumindest einer der zumindest zwei Frequenzen basierend auf den Ergebnissen des Schritts der Verarbeitung der diagnostischen Information, die in dem Schritt des Messens der Mikrowellensignale erhalten wurden.

20. Verfahren nach Anspruch 19, bei dem der Schritt des Bestrahlens des ausgewählten Materials mit Mikrowellen variierender Frequenzen innerhalb der Mikrowellenheizvorrichtung mit variabler Frequenz durchgeführt wird, wobei die Mikrowellenheizvorrichtung mit variabler Frequenz aufweist:
einen ersten Mikrowellensignalgenerator für das Erzeugen von zumindest einem ersten Signal mit einer ausgewählten Wellenform, Frequenz und Amplitude,
einen zweiten Mikrowellengenerator für das Erzeugen zumindest eines zweiten Signals mit einer ausgewählten Wellenform, Frequenz und Amplitude,
einen ersten Signalverstärker für das Verstärken des ersten Signals, wobei der erste Signalverstärker einen ersten Satz von Mikrowellen innerhalb eines ausgewählten Frequenzbereichs erzeugt und eine Zentralfrequenz festlegt, wobei der erste Satz von Mikrowellen eine verknüpfte Leistung mit einer ausgewählten Amplitude hat, wobei der erste Signalverstärker eine erste Mikrowellenelektroneneinrichtung aufweist,
einen zweiten Signalverstärker für das Verstärken des zweiten Signals, wobei der zweite Signalverstärker einen zweiten Satz von Mikrowellen innerhalb eines ausgewählten Frequenzbereichs erzeugt und eine Zentralfrequenz festlegt, wobei der zweite Satz von Mikrowellen eine verknüpfte Leistung mit einer ausgewählten Amplitude hat, wobei der zweite Signalverstärker eine zweite Mikrowellenelektroneneinrichtung aufweist,
eine erste Energieversorgung für das Bereitstellen von Energie zu dem ersten Signalverstärker,
eine zweite Energieversorgung für das Bereitstellen von Energie zu dem zweiten Signalverstärker,
einen Übertrager für das Weiterleiten des ersten und zweiten Satzes von Mikrowellen in den Mikrowellenofen,
einen Signalleiter für das Leiten des ersten und zweiten Satzes von Mikrowellen in den Mikrowellenofen und der Mikrowellen, die von dem Mikrowellenofen reflektiert wurden, in einen reflektierten Lastabführer für das Abführen der von dem Mikrowellenofen reflektierten Mikrowellen, wobei die von dem Mikrowellenofen reflektierten Mikrowellen eine verknüpfte Energie und Größe haben,
einen Systemmonitor für das Überwachen der Größe der Energie, die mit dem ersten und dem zweiten Satz von Mikrowellen verknüpft ist, die zu dem Mikrowellenofen geleitet werden, und mit der Größe der Energie, die mit den Mikrowellen, die von dem Mikrowellenofen reflektiert werden, verknüpft sind, wobei der Systemmonitor dazu dient, eine Effizienz der Mikrowellenheizvorrichtung variabler Frequenz zu überwachen, und
einen Datenprozessor für das Verarbeiten der Ausgabe von dem Systemmonitor.

21. Verfahren nach Anspruch 19, bei dem der Schritt des Bestrahlens des ausgewählten Materials mit Mikrowellen variierender Frequenz innerhalb der Mikrowellenheizvorrichtung variabler Frequenz durchgeführt wird, wobei die Mikrowellenheizvorrichtung variabler Frequenz aufweist:
einen Mikrowellensignalgenerator für das Erzeugen zumindest eines ersten Signals mit einer ausgewählten Wellenform, Frequenz und Amplitude und eines zweiten Signals mit einer ausgewählten Wellenform, Frequenz und Amplitude,
einen Signalverstärker für das Verstärken des ersten und des zweiten Signals, wobei der Signalverstärker einen ersten Satz und einen zweiten Satz von Mikrowellen innerhalb eines ausgewählten Frequenzbereichs und unter Festlegung einer Zentralfrequenz erzeugt, wobei der erste Satz von Mikrowellen eine verknüpfte Energie mit einer ausgewählten Amplitude hat, wobei der zweite Satz von Mikrowellen eine verknüpfte Energie mit einer ausgewählten Amplitude hat, wobei der Signalverstärker eine Mikrowellenelektroneinrichtung aufweist,
eine Energieversorgung für das Bereitstellen von Energie zu dem Signalverstärker,
einen Übertrager für das Übertragen des ersten und zweiten Satzes von Mikrowellen in den Mikrowellenofen,
einen Signalleiter für das Leiten des ersten und zweiten Satzes von Mikrowellen in dem Mikrowellenofen und das Leiten der von dem Mikrowellenofen reflektierten Mikrowellen in eine Einrichtung zum Ableiten der reflektierten Last für das Dissipieren der von dem Mikrowellenofen reflektierten Mikrowellen, wobei die von dem Mikrowellenofen reflektierten Mikrowellen eine verknüpfte Energie und Größe haben,
einen Systemmonitor für das Überwachen der Größe der Energie, die mit dem ersten und zweiten Satz von Mikrowellen verknüpft ist, die zu dem Mikrowellenofen geleitet werden, und für das Überwachen der Größe der Energie, die mit den von dem Mikrowellenofen reflektierten Mikrowellen verknüpft ist, wobei der Systemmonitor dazu dient, eine Effizienz der Mikrowellenheizvorrichtung variabler Frequenz zu überwachen, und
einen Datenprozessor für das Verarbeiten des Ausgangs von dem Systemmonitor.

## Revendications

1. Appareil hyperfréquence (10) de chauffe à fréquence variable de traitement de matériaux choisis, comprenant :
un four hyperfréquence (32) incluant une cavité multimode (34) pour traiter les matériaux choisis ;
un moyen (12) destiné à irradier simultanément les matériaux choisis à l'aide d'au moins deux signaux hyperfréquences ayant au moins deux fréquences définies par les au moins deux signaux hyperfréquences pour produire une pluralité de fréquences réfléchies ;
un moyen (26) destiné à mesurer des signaux hyperfréquences à l'intérieur de la cavité multimode (34), les signaux mesurés incluant au moins deux de la pluralité de fréquences réfléchies dans le but d'obtenir de l'information de diagnostic ;
un moyen destiné à traiter de l'information de diagnostic obtenue à partir des signaux hyperfréquences mesurés ; et
un moyen (24) destiné à commander au moins l'une des au moins deux fréquences sur la base de résultats provenant de l'information de diagnostic traitée obtenue à partir des signaux hyperfréquences mesurés.

2. Appareil hyperfréquence de chauffe à fréquence variable selon la revendication 1, dans lequel le moyen destiné à irradier simultanément les matériaux choisis comprend un générateur (12) de signaux hyperfréquences servant à produire au moins un premier signal ayant une forme d'onde, une fréquence et une amplitude choisies et un second signal ayant une forme d'onde, une fréquence et une amplitude choisies ;
un amplificateur (20) de signaux destiné à amplifier lesdits premier et second signaux, ledit amplificateur de signaux produisant un premier ensemble et un second ensemble d'hyperfréquences à l'intérieur d'une gamme de fréquences choisie et définissant une fréquence centrale, ledit premier ensemble d'hyperfréquences ayant une puissance associée à une amplitude choisie, ledit second ensemble d'hyperfréquences ayant une puissance associée à une amplitude choisie, ledit amplificateur de signaux comprenant un dispositif électronique (20, 20', 20'') ;
une alimentation en puissance (22) destinée à appliquer de la puissance audit amplificateur (20) de signaux ;
un émetteur destiné à transporter lesdits premier et second ensembles d'hyperfréquences dans ledit four hyperfréquence ;
un directeur (24) de signaux destiné à diriger lesdits premier et second ensembles d'hyperfréquences dans ledit four hyperfréquence (32) et les hyperfréquences réfléchies à partir dudit four hyperfréquence (32) dans un dissipateur (28) de charges réfléchies, ledit dissipateur de charges réfléchies servant à dissiper lesdites hyperfréquences réfléchies à partir dudit four hyperfréquence (32), lesdites hyperfréquences réfléchies à partir dudit four hyperfréquence (32) ayant leurs puissance et amplitude associées ;
le moyen destiné à mesurer des signaux hyperfréquences comprend un dispositif de surveillance (26) de système servant à surveiller ladite amplitude de ladite puissance associée auxdits premier et second ensembles d'hyperfréquences transportés vers ledit four hyperfréquence (32), ledit dispositif de surveillance de système servant à mesurer une puissance réfléchie à une pluralité de fréquences, dans lequel de l'information de diagnostic de traitement peut être obtenue à partir d'au moins deux de ladite pluralité de fréquences ; et
le moyen destiné à traiter de l'information de diagnostic comprend un processeur de données servant à traiter la sortie dudit dispositif de surveillance de système.

3. Appareil hyperfréquence (10) de chauffe à fréquence variable selon la revendication 2, dans lequel ledit amplificateur (20) de signaux définit une largeur de bande utile d'au moins cinq pour cent de ladite fréquence centrale d'amplificateur de signaux.

4. Appareil hyperfréquence de chauffe à fréquence variable selon la revendication 2, dans lequel on choisit ledit générateur (12) de signaux hyperfréquences à partir du groupe constitué d'un tube à onde progressive, d'un twystron, d'un klystron, d'un amplificateur à champs croisés, d'un magnétron coaxial et d'un gyrotron.

5. Appareil hyperfréquence de chauffe à fréquence variable selon la revendication 2, dans lequel ledit processeur de données inclut au moins un réseau neuronal.

6. Appareil hyperfréquence de chauffe à fréquence variable selon la revendication 2, dans lequel ledit dispositif de surveillance de système inclut au moins un dispositif destiné à mesurer des signaux hyperfréquences à une pluralité de fréquences, et ledit processeur de données inclut au moins un convertisseur destiné à convertir lesdits signaux hyperfréquences mesurés en signatures distinctives, et un dispositif destiné au moins à classifier lesdites signatures.

7. Appareil de chauffe à fréquence variable selon la revendication 6, dans lequel ledit dispositif destiné à mesurer des signaux hyperfréquences inclut au moins un convertisseur d'analogique en numérique.

8. Appareil hyperfréquence de chauffe à fréquence variable selon la revendication 6, dans lequel ledit dispositif destiné au moins à classifier lesdites signatures inclut au moins un réseau neuronal.

9. Appareil de chauffe à fréquence variable selon la revendication 2, dans lequel ledit dispositif de surveillance de système inclut au moins une antenne reçue à l'intérieur de ladite cavité multimode, ladite antenne étant prévue pour transmettre de l'énergie hyperfréquence dans ladite cavité multimode et pour recevoir de l'énergie hyperfréquence à partir de ladite cavité multimode.

10. Appareil hyperfréquence de chauffe à fréquence variable selon la revendication 2, dans lequel ledit dispositif de surveillance de système inclut un discriminateur de fréquence.

11. Appareil hyperfréquence de chauffe à fréquence variable selon la revendication 10, dans lequel ledit discriminateur de fréquence inclut un dispositif choisi à partir du groupe constitué de filtres passe-haut, de filtres passe-bas, de filtres passe-bande, de filtres coupe-bande, d'analyseurs de spectre, de filtres passe-bande suiveurs, de filtres coupe-bande suiveurs, d'analyseurs scalaires de réseaux, d'analyseurs vectoriels de réseaux et de synthétiseurs de fréquences.

12. Appareil hyperfréquence de chauffe à fréquence variable selon la revendication 2, dans lequel on peut régler ladite alimentation en puissance, ce par quoi l'on peut moduler sélectivement ladite amplitude dudit signal produit par ledit générateur de signaux.

13. Appareil hyperfréquence de chauffe à fréquence variable selon la revendication 2, comprenant en outre un régisseur d'amplitude de signal destiné à moduler sélectivement ladite amplitude dudit signal produit par ledit générateur de signaux.

14. Appareil hyperfréquence de chauffe à fréquence variable selon la revendication 2, dans lequel ladite sortie dudit dispositif de surveillance de système inclut de l'information se rapportant à au moins une propriété physique choisie desdits matériaux choisis en cours de traitement.

15. Appareil hyperfréquence de chauffe à fréquence variable selon la revendication 14, dans lequel ledit matériau choisi en cours de traitement est un polymère, et ladite au moins une propriété physique choisie inclut au moins une propriété choisie à partir du groupe constitué des degrés de polymérisation, de cuisson et de liaison croisée dudit polymère.

16. Appareil hyperfréquence de chauffe à fréquence variable selon la revendication 14, dans lequel ledit matériau choisi en cours de traitement est une céramique, et ladite au moins une propriété physique choisie inclut au moins une propriété choisie à partir du groupe constitué de la densité, de la température, de la granulométrie et de la répartition de phases.

17. Appareil hyperfréquence de chauffe à fréquence variable selon la revendication 14, dans lequel au moins une partie dudit matériau choisi en cours de traitement est transformée en un état de plasma, et ladite au moins une propriété physique choisie inclut des propriétés d'état dudit plasma.

18. Appareil hyperfréquence de chauffe à fréquence variable selon la revendication 2, dans lequel ledit directeur de signaux est pourvu d'un dispositif de refroidissement servant à dissiper de la chaleur accumulée lors du fonctionnement dudit directeur de signaux.

19. Procédé pour traiter un matériau choisi, comprenant les étapes, dans lesquelles :
a. on place ledit matériau choisi dans un appareil hyperfréquence (10) de chauffe à fréquence variable comprenant un four hyperfréquence (32) incluant une cavité multimode (34) ;
b. on irradie simultanément ledit matériau choisi avec au moins deux signaux hyperfréquences ayant au moins deux fréquences définies par lesdits au moins deux signaux hyperfréquences pour produire une pluralité de fréquences réfléchies ;
c. on mesure des signaux hyperfréquences à l'intérieur de ladite cavité multimode, lesdits signaux hyperfréquences mesurés incluant au moins deux de ladite pluralité de fréquences réfléchies pour obtenir de l'information de diagnostic ;
d. on traite ladite information de diagnostic obtenue lors de ladite étape de mesure de signaux hyperfréquences ; et
e. on commande au moins l'une desdites au moins deux fréquences sur la base de résultats de ladite étape de traitement de ladite information de diagnostic obtenue lors de ladite étape de mesure de signaux hyperfréquences.

20. Procédé selon la revendication 19, dans lequel on effectue ladite étape d'irradiation dudit matériau choisi avec des hyperfréquences de fréquences qui varient à l'intérieur dudit appareil hyperfréquence de chauffe à fréquence variable, ledit appareil hyperfréquence de chauffe à fréquence variable comprenant :
un premier générateur de signaux hyperfréquences destiné à produire au moins un premier signal ayant une forme d'onde, une fréquence et une amplitude choisies ;
un second générateur de signaux hyperfréquences destiné à produire au moins un second signal ayant une forme d'onde, une fréquence et une amplitude choisies ;
un premier amplificateur de signaux destiné à amplifier ledit premier signal, ledit premier amplificateur de signaux produisant un premier ensemble d'hyperfréquences à l'intérieur d'une gamme de fréquences choisie et définissant une fréquence centrale, ledit premier ensemble d'hyperfréquences ayant une puissance associée à une amplitude choisie, ledit premier amplificateur de signaux comprenant un premier dispositif électronique ;
un second amplificateur de signaux destiné à amplifier ledit second signal, ledit second amplificateur de signaux produisant un second ensemble d'hyperfréquences à l'intérieur d'une gamme de fréquences choisie et définissant une fréquence centrale,
ledit second ensemble d'hyperfréquences ayant une puissance associée à une amplitude choisie, ledit second amplificateur de signaux comprenant un second dispositif électronique ;
une première alimentation en puissance destinée à appliquer de la puissance audit premier amplificateur de signaux ;
une seconde alimentation en puissance destinée à appliquer de la puissance audit second amplificateur de signaux ;
un émetteur destiné à transportes lesdits premier et second ensembles d'hyperfréquences dans ledit four hyperfréquence ;
un directeur de signaux destiné à diriger lesdits premier et second ensembles d'hyperfréquences dans ledit four hyperfréquence et les hyperfréquences réfléchies à partir dudit four dans un dissipateur de charges réfléchies, ledit dissipateur de charges réfléchies servant à dissiper lesdites hyperfréquences réfléchies à partir dudit four hyperfréquence, lesdites hyperfréquences réfléchies à partir dudit four hyperfréquence ayant leurs puissance et amplitude associées ;
un dispositif de surveillance de système destiné à surveiller ladite amplitude de ladite puissance associée auxdits premier et second ensembles d'hyperfréquences transportés vers ledit four hyperfréquence et ladite amplitude de ladite puissance associée auxdites hyperfréquences réfléchies à partir dudit four hyperfréquence, ledit dispositif de surveillance de système servant à surveiller une efficacité dudit appareil hyperfréquence de chauffe à fréquence variable ; et
un processeur de données destiné à traiter la sortie dudit dispositif de surveillance de système.

21. Procédé selon la revendication 19, dans lequel on effectue ladite étape d'irradiation dudit matériau choisi avec des hyperfréquences de fréquences qui varient à l'intérieur dudit appareil hyperfréquence de chauffe à fréquence variable, ledit appareil hyperfréquence de chauffe à fréquence variable comprenant :
un générateur de signaux hyperfréquences destiné à produire au moins un premier signal ayant une forme d'onde, une fréquence, et une amplitude choisies, et un second signal ayant une forme d'onde, une fréquence et une amplitude choisies ;
un amplificateur de signaux destiné à amplifier lesdits premier et second signaux, et l'amplificateur de signaux produisant un premier ensemble et un second ensemble d'hyperfréquences à l'intérieur d'une gamme de fréquences choisie et définissant une fréquence centrale, ledit premier ensemble d'hyperfréquences ayant une puissance associée à une amplitude choisie, ledit second ensemble d'hyperfréquences ayant une puissance associée à une amplitude choisie, ledit amplificateur de signaux comprenant un dispositif électronique hyperfréquence ;
une alimentation en puissance destinée à appliquer de la puissance audit amplificateur de signaux ;
un émetteur destiné à transporter lesdits premier et second ensembles d'hyperfréquences dans ledit four hyperfréquence ;
un directeur de signaux destiné à diriger lesdits premier et second ensembles d'hyperfréquences dans ledit four hyperfréquence et les hyperfréquences réfléchies à partir dudit four hyperfréquence dans un dissipateur de charges réfléchies, ledit dissipateur de charges réfléchies servant à dissiper lesdites hyperfréquences réfléchies à partir dudit four hyperfréquence, lesdites hyperfréquences réfléchies à partir dudit four hyperfréquence ayant leurs puissance et amplitude associées ;
un dispositif de surveillance de système destiné à surveiller ladite amplitude de ladite puissance associée auxdits premier et second ensembles d'hyperfréquences transportés vers ledit four hyperfréquence et ladite amplitude de ladite puissance associée auxdites hyperfréquences réfléchies à partir dudit four hyperfréquence, ledit dispositif de surveillance de système servant à surveiller une efficacité dudit appareil hyperfréquence de chauffe à fréquence variable ; et
un processeur de données destiné à traiter la sortie dudit dispositif de surveillance de système.
